# EUROPÄISCHE PATENTSCHRIFT

(11) **EP 1 629 721 B1**
(45) Veröffentlichungstag und Bekanntmachung des Hinweises auf die Patenterteilung: **28.05.2008**
(21) Anmeldenummer: 05015552.2
(22) Anmeldetag: 18.07.2005
(51) Int. Cl.: A23K 1/18, A23K 1/12, A23K 1/14

(54) **Fertig-Ergänzungsfuttermittel für Pferde**
Instant feed supplement for horses
Supplément de fourrage instantané pour chevaux

(30) Priorität: 26.08.2004 DE 102004041400
(43) Veröffentlichungstag der Anmeldung: 01.03.2006
(73) Patentinhaber: Scharnebecker Mühle Dienstleistung und Handelgesellschaft mbH, 21379 Scharnebeck (DE)
(72) Erfinder: Moss, Hans-Hinnrich, 21379 Scharnebeck (DE)
(74) Vertreter: Kilian, Helmut

(56) Entgegenhaltungen:
- WO-A-99/11276
- AU-B2- 753 033
- R. PAUL SCHWAB: "Tying-Up" THE NORTHWEST HORSE SOURCE, [Online] Juli 2004 (2004-07), XP002359198 Gefunden im Internet: URL:http://www.nwhorsesource.com/artman/pu blish/magazine_archive/article_1671.shtml> [gefunden am 2005-12-14]
- BETH A. VALENTINE: "Rural Heritage Vet Clinic - Diet for a Happy EPSM Horse" RURAL HERITAGE, [Online] 23. März 2003 (2003-03-23), XP002359199 281 Dean Ridge Lane, Gainesboro, TN, USA Gefunden im Internet: URL:http://www.ruralheritage.com/vet_clini c/epsmdiet2.htm> [gefunden am 2005-12-14]

## Beschreibung

Die vorliegende Erfindung betrifft ein Fertig-Ergänzungsfuttermittel für Pferde; hierunter werden solche Futtermittel verstanden, die beispielsweise in pelletierter Form oder als so genanntes Müsli in industriellem Maßstab hergestellt und in größeren bis großen Verpackungseinheiten im Handel sind. Diese Fertig-Ergänzungsfuttermittel werden auch als Zusatz-Futtermittel bezeichnet, da sie üblicherweise an Pferde verfüttert werden, die gleichzeitig durch Gras (Weidegang), Heu und Stroh (Einstreu) versorgt werden. Übliche weitere Futtermittelergänzung sind Mineralfuttergaben.

Aus R. Paul Schwab "Tying-Up", The Northwest Horse Source (online), Juli 2004, P-002359198 ist es bekannt, beim Auftreten des Rhabdomyolyse-Syndroms ERS und insbesondere der Muskelstoffwechselerkrankung Polysacharid-Speicher-Myopathie PSSM bei Pferden den Stärke- und Zuckergehalt im Futter herabzusetzen und Heu und Gras in einer Menge von wenigstens 1,5 % des Körpergewichtes pro Tag zu verfüttern. Bei Bedarf sollte Futter mit niedriglöslichen Kohlehydraten zugegeben werden.

Aus Beth A. Valentine "Rural Heritage Vat Clinic - A diet for a happy EPSM horse", Rural Heritage (online), 23. März 2003, XP-002359199 ist es weiterhin bekannt, bei Pferden mit PSSM die Kohlenhydrate herabzusetzen und zusätzlich Fette zu verfüttern, die entweder pflanzliche Öle oder tierische Fette sein können. Die Öle können in einem gewissen Maße durch Reiskleie ersetzt sein.

Aus der AU-B-753033 ist weiterhin zu entnehmen, zur Leistungssteigerung bei Rennpferden wenigstens einen Teil des Getreides des Futters durch Getreide zu ersetzen, dem ein wesentlicher Anteil des Endosperms entzogen ist.

Aufgabe der vorliegenden Erfindung ist es, ein Fertig-Ergänzungsfuttermittel für Pferde der genannten Art, das darüber hinaus auch zur Prophylaxe oder Therapie der Muskelstoffwechselerkrankung "Polisaccharid-Speicher-Myopathie" (PSSM) geeignet ist, zur Verfügung zu stellen.

Die erfindungsgemäße Aufgabe wird durch das Fertig-Ergänzungsfuttermittel gemäß Anspruch 1 gelöst; weitere vorteilhafte Ausgestaltungen der Erfindung sind Gegenstand der nachfolgenden Unteransprüche 2 - 6.

Das Konzept des erfindungsgemäßen Fertig-Ergänzungsfuttermittels für Pferde berücksichtigt hierbei auch die Annahme, dass ein solches Futtermittel weitmöglichst getreidestärkefrei sein soll.

Umfangreiche Versuche haben ergeben, dass die erfindungsgemäße Kombination der Futtermittelbestandteile des erfindungsgemäßen Fertig-Ergänzungsfuttermittels ein vollwertiger Ersatz für die bisher im Handel befindlichen Fertig-Ergänzungsfuttermittel für Pferde ist; gleichzeitig dient es der Prophylaxe oder Therapie der Muskelstoffwechselerkrankung "Polisaccharid-Speicher-Myopathie" (PSSM). Insbesondere ist auch hervorzuheben, dass in der Kombination der bittere Geschmack, der Reisfuttermehl oder Reiskleie eigen ist, und der die Aufnahme durch Pferde an sich wesentlich behindert, überspielt wird.

Das erfindungsgemäße Fertig-Ergänzungsfuttermittels für Pferde enthält 5-25 % Reismehl und/oder Reiskleie, 12-30 % pflanzenfettliefernde Bestandteile, 20-40 % Grünmehl, und 20-40 % Zuckerrübensamen, wobei sich alle Prozentangaben auf das Gewicht des Fertig-Ergänzungsfuttermittels beziehen. Vorzugsweise enthält es 5-15 % Reismehl und/oder Reiskleie, 15-25 % pflanzenfettliefernde Bestandteile, 15-35 % Grünmehl und 15-35 % Zuckerrübensamen. Besonders bevorzugt ist ein Gehalt an 8-12 % Reis-mehl und/oder Reiskleie, 16-20 % pflanzenfettliefernde Bestandteile, 23-30 % Grünmehl und 22-28 % Zuckerrübensamen, insbesondere 10 % Reismehl und/oder Reiskleie, 18 % pflanzenfettliefernde Bestandteile, 27 % Grünmehl und 25 % Zuckerrübensamen.

Die pflanzenfettliefernden Bestandteile setzen sich bevorzugt aus etwa 10 % Sonnenblumenkernen (schwarz und/oder gestreift), 2 % Sojaöl, 3 % Leinkuchen und 3 % Leinöl (Prozentangaben bezogen auf das Gewicht des Futtermittels) zusammen.

Besonders bevorzugt enthält das erfindungsgemäße Fertig-Ergänzungsfuttermittel insbesondere zusätzlich etwa 5 % Trockenschnitzel, 5 % Apfeltrester, 5 % Bierhefe und/oder 5 % Sojaschrot.

## Patentansprüche

1. Fertig-Ergänzungsfuttermittel für Pferde, das auch zur Prophylaxe oder Therapie der Muskelstoffwechselerkrankung PSSM geeignet ist, enthaltend
5-25 % Reismehl und /oder Reiskleie
12-30 % pflanzenfettliefernde Bestandteile
20-40 % Grünmehl
20-40 % Zuckerrübensamen,
wobei sich alle Prozentangaben auf das Gewicht des Fertig-Ergänzungsfuttermittels beziehen.

2. Fertig-Ergänzungsfuttermittel nach Anspruch 1, enthaltend
5-15 % Reismehl und /oder Reiskleie
15-25 % pflanzenfettliefernde Bestandteile
15-35 % Grünmehl
15-35 % Zuckerrübensamen.

3. Fertig-Ergänzungsfuttermittel nach mindestens einem der vorhergehenden Ansprüche, enthaltend
8-12 % Reismehl und/oder Reiskleie
16-20 % pflanzenfettliefernde Bestandteile
23-30 % Grünmehl
22-28 % Zuckerrübensamen.

4. Fertig-Ergänzungsfuttermittel nach mindestens einem der vorhergehenden Ansprüche, enthaltend
10 % Reismehl und /oder Reiskleie
18 % pflanzenfettliefernde Bestandteile
27 % Grünmehl
25 % Zuckerrübensamen.

5. Fertig-Ergänzungsfuttermittel nach mindestens einem der vohergehenden Ansprüche, **dadurch gekennzeichnet, dass** es zusätzlich etwa 5 % Trockenschnitzel, 5 % Apfeltrester, 5 % Bierhefe und/oder 5 % Sojaschrot enthält.

6. Fertig-Ergänzungsfuttermittel nach mindestens einem der vorhergehenden Ansprüche, **dadurch gekennzeichnet, dass** die pflanzenfettliefernden Bestandteile aus etwa 10 % Sonnenblumenkerne (schwarz und/oder gestreift), 2 % Sojaöl, 3 % Leinkuchen und 3 % Leinöl (Prozentangaben bezogen auf das Gewicht des Fertig-Ergänzungsfuttermittels) zusammengesetzt sind.

## Claims

1. Instant feed supplement for horses, which is also suitable for prophylaxis or therapy of the muscle metabolism disease PSSM (polysaccharide storage myopathy), containing
5-25% rice flour and/or rice bran
12-30% constituents yielding vegetable fat
20-40% grass meal
20-40% sugar beet seed,
wherein all percentages are based on the weight of the instant feed supplement.

2. Instant feed supplement according to claim 1, containing
5-15% rice flour and/or rice bran
15-25% constituents yielding vegetable oil
15-35% grass meal
15-35% sugar beet seed.

3. Instant feed according to at least one of the preceding claims, containing
8-12% rice flour and/or rice bran
16-20% constituents yielding vegetable oil
23-30% grass meal
22-28% sugar beet seed.

4. Instant feed supplement according to at least one of the preceding claims, containing
10% rice flour and/or rice bran
18% constituents yielding vegetable oil
27% grass meal
25% sugar beet seed.

5. Instant feed supplement according to at least one of the preceding claims, **characterised in that** it additionally contains about 5% dry sugar beet pulp, 5% apple pomace, 5% brewer's yeast and/or 5% soya meal.

6. Instant feed supplement according to at least one of the preceding claims, **characterised in that** the constituents yielding vegetable oil are composed of about 10% sunflower hearts (black and/or striped), 2% soya oil, 3% linseed cake and 3% linseed oil (percentages based on the weight of the instant feed supplement).

## Revendications

1. Aliment de complément instantané pour chevaux, qui convient également à la prophylaxie ou thérapie de la myopathie par rétention de polysaccharides (PSSM), contenant :
◆ 5 à 25 % de farine de riz et/ou de son de riz
◆ 12 à 30 % de composants fournissant des graisses végétales
◆ 20 à 40 % de farine d'herbe
◆ 20 à 40 % de graines de betteraves sucrières,
toutes les indications de pourcentage se rapportant au poids de l'aliment de complément instantané.

2. Aliment de complément instantané selon la revendication 1, contenant :
◆ 5 à 15 % de farine de riz et/ou de son de riz
◆ 15 à 25 % de composants fournissant des graisses végétales
◆ 15 à 35 % de farine d'herbe
◆ 15 à 35 % de graines de betteraves sucrières.

3. Aliment de complément instantané selon au moins l'une des revendications précédentes, contenant :
◆ 8 à 12 % de farine de riz et/ou de son de riz
◆ 16 à 20 % de composants fournissant des graisses végétales
◆ 23 à 30 % de farine d'herbe
◆ 22 à 28 % de graines de betteraves sucrières.

4. Aliment de complément instantané selon au moins l'une des revendications précédentes, contenant :
◆ 10 % de farine de riz et/ou de son de riz
◆ 18 % de composants fournissant des graisses végétales
◆ 27 % de farine d'herbe
◆ 25 % de graines de betteraves sucrières.

5. Aliment de complément instantané selon au moins l'une des revendications précédentes, **caractérisé en ce qu'**il contient en plus environ 5 % de pulpe sèche, 5 % de marc de pomme, 5 % de levure de bière et/ou 5 % de tourteau de soja.

6. Aliment de complément instantané selon au moins l'une des revendications précédentes, **caractérisé en ce que** les composants fournissant des graisses végétales sont composés d'environ 10 % de graines de tournesol (noires et/ou rayées), 2 % d'huile de soja, 3 % de tourteau de lin et 3 % d'huile de lin (les indications de pourcentage se rapportent au poids de l'aliment de complément instantané) .
